# EUROPÄISCHE PATENTSCHRIFT

(11) **EP 0 629 522 B1**
(45) Veröffentlichungstag und Bekanntmachung des Hinweises auf die Patenterteilung: **22.11.1995**
(21) Anmeldenummer: 94106170.7
(22) Anmeldetag: 21.04.1994
(51) Int. Cl.: B60K 15/077

(54) **Brennstoffördereinrichtung**
Fuel delivery system
Système d'alimentation en carburant

(30) Priorität: 19.06.1993 DE 4320375
(43) Veröffentlichungstag der Anmeldung: 21.12.1994
(73) Patentinhaber: Pierburg Aktiengesellschaft, 41460 Neuss (DE)
(72) Erfinder: Radermacher, Bernhard, D-41748 Viersen (DE)

(56) Entgegenhaltungen:
- DE-A- 3 510 890
- DE-A- 3 941 147
- DE-A- 4 212 698
- FR-A- 2 453 045

## Beschreibung

Die Erfindung betrifft eine in einen Brennstofftank einsetzbare Brennstoffördereinrichtung nach dem Oberbegriff des Patentanspruchs 1.

Es ist bereits eine derartige Einrichtung (DE-PS 35 10 890) bekannt, bei der eine Vorpumpe aus dem freien Tankraum in eine Schlingerkammer fördert, aus der die Hauptpumpe ansaugt. Die Absaugung erfolgt aus einem unteren Bereich der Schlingerkammer, wohingegen im höchsten Bereich ein Domabschnitt besteht, der über einen Anschluß in den freien Tankraum führt. Mit dieser Einrichtung gelingt es bereits im wesentlichen gasfreien Brennstoff zu einer Brennkraftmaschine zu fördern und gleichzeitig ist sichergestellt, daß bei annähernd leerem Tank auch bei Kurvenfahrt ausreichend Brennstoff zur Verfügung steht.

Bei dieser Anordnung besteht der Nachteil, daß bei Start, Warmlauf und Heißstart der Brennkraftmaschine ein relativ großes Kammervolumen mit Brennstoff gefüllt werden muß, bevor ein gewünschter Vordruck erreicht wird. Darüber hinaus ist eine solche Einrichtung gegenüber einer bekannten Einrichtung (DE-AS 26 02 234), bei der Brennstoff nur aus einer offenen Schlingerkammer abgesaugt wird, sehr aufwendig.

Hiervon ausgehend liegt die Erfindungsaufgabe darin, eine kostengünstige Einrichtung vorgenannter Art durch Verringerung von Montageaufwand und Bauteilen zu schaffen, wobei auch Funktionsverbesserungen hinsichtlich Start, Warmlauf und Heißstart der Brennkraftmaschine erreicht werden sollen.

Erfindungsgemäß ist diese Aufgabe durch die im Kennzeichen des Patentanspruchs 1 genannten Merkmale gelöst worden.

Ein Ausführungsbeispiel der Erfindung ist in der Zeichnung dargestellt und wird nachfolgend beschrieben.

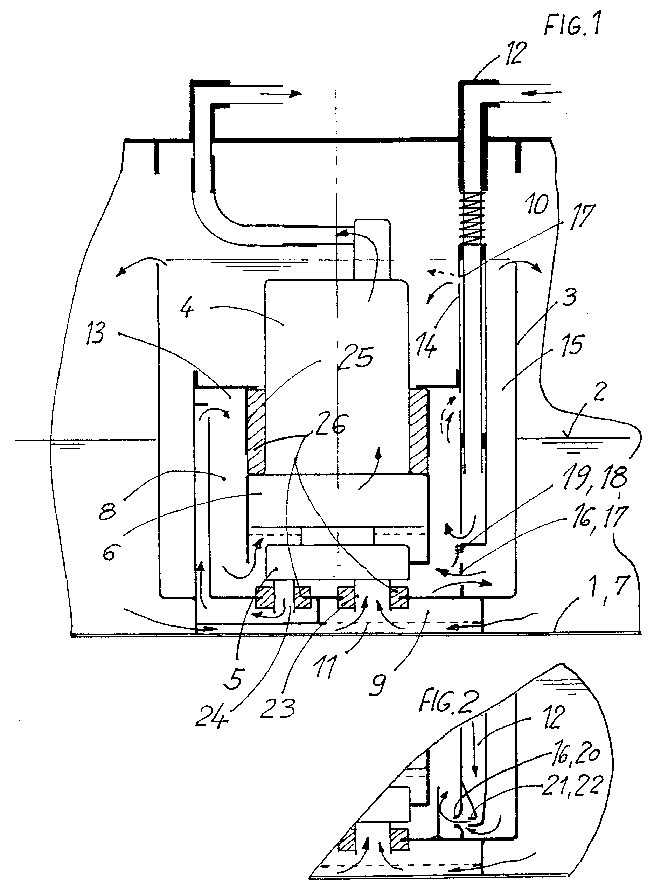

Diese zeigt in:
Fig. 1
   einen Abschnitt eines Brennstofftanks;
Fig. 2
   einen Ausschnitt aus Fig. 1 mit alternativer Ausführung.

Die Fig. 1 zeigt schematisch einen Abschnitt eines Brennstofftanks 1 einer Brennkraftmaschine, in dem Brennstoff mit waagerechtem Füllstandsspiegel 2 steht. In diesem ist eine Brennstoffördereinrichtung 3 angeordnet, mit einem Pumpenaggregat 4, bestehend aus Vor- und Hauptpumpe 5, 6. Das Pumpenaggregat 4 ragt in eine auf den Tankboden 7 aufgesetzte erste Schlingerkammer 8 hinein und fördert Brennstoff über eine Vorkammer 9, die gegenüber dem freiem Tankraum 10 durch ein Filter 11 abgeschottet ist, wohingegen die Hauptpumpe 6 aus der Schlingerkammer 8 zur Brennkraftmaschine fördert.

Von der Brennkraftmaschine fließt über einen Rücklaufanschluß 12 nicht benötigter Brennstoff in die Schlingerkammer 8 hinein, wobei Gasanteile im Brennstoff in einem Domabschnitt 13 gesammelt werden und über einen in den freien Tankraum 10 führenden Anschluß 14 abfließen können. Soweit entspricht diese Einrichtung dem bekannten Stand der Technik.

Erfindungsgemäß ist vorgesehen, daß die erste Schlingerkammer 8 von einer zweiten Schlingerkammer 15 umgeben ist, die mit der ersten durch einen im unteren Bereich beider Schlingerkammern 8, 15 bestehenden Anschluß 16 verbunden ist und obem zum freiem Tankraum 10 hin offen ist.

Der Anschluß 16 zwischen den beiden Schlingerkammern 8, 15 weist vorteilhafterweise einen Drosselabschnitt 17 auf und ebenso der Anschluß 14 zum freien Tankraum 10 hin einen Drosselabschnitt 17 auf, womit erreicht wird, daß sich im ersten Schlingertopf 8 ein Vordruck einstellt, da der durch die Vorpumpe 6 im Überfluß geförderte Brennstoff und der über den Rücklaufanschluß 12 geförderte nur über diese beiden Drosselabschnitte 17 abfließen können. Dieser abfließende Brennstoff füllt in dem dargestellten Zustand auch die zweite Schlingerkammer 15 bis zum Überlaufen.

Es hat sich als vorteilhaft herausgestellt, wenn der Anschluß 16 im unteren Bereich ein Rückschlagventil 18 aufweist, das ein Ausströmen aus der ersten Schlingerkammer 8 verhindert. Mit dieser Maßnahme gelingt es, das später beschriebene Zuströmen von Brennstoff aus der zweiten Schlingerkammer 15 in die erste zu erleichtern, da der Anschluß 16 nun ungedrosselt ausgeführt werden kann. Dieses Rückschlagventil 18 kann auch in einem Bypass 19 zum gedrosselten Anschluß 16 angeordnet sein, wie dargestellt ist.

Fig. 2 zeigt eine weitere vorteilhafte Ausgestaltung, bei der alternativ zum Rückschlagventil 18 der Anschluß 16 den Einlaß 20 einer Strahlpumpe 21 bildet, deren Strahldüse 22 durch den Auslaß des Rücklaufanschlusses 12 gebildet ist und in den Einlaß 20 strahlt. Durch diese Maßnahme läßt sich der erreichbare Vordruck erhöhen und gleichzeitig das Zuströmen von Brennstoff aus der zweiten Schlingerkammer 15 in die erste erleichtern.

Zur einfachen Montage der Einrichtung, zur Geräuschdämmung und Abdichtung ist vorgesehen, daß wenigstens zwischen der Hauptpumpe 6 und Saug- und Druckstutzen 23 und 24 der Vorpumpe 5 des Pumpenaggregates 4 und den Schlingerkammerwänden 25 elastische Einspannstücke 26 eingespannt sind.

### Funktion

Bei Motor- oder Fahrbetrieb fördert die Vorpumpe 5 gegenüber der Hauptpumpe 6 eine Mehrmenge, so daß sich in der ersten Schlingerkammer 8 ein höherer Druck einstellt als im freien Tankraum 10, da der Abfluß durch die Drosselabschnitte 17 gedrosselt ist. Dieser höhere Druck verhindert das Auftreten von Gasblasen erheblich, so daß die Hauptpumpe 6 gasfreien Brennstoff ansaugen kann. Bei Start und insbesondere Heißstart steht in beiden Schlingerkammern ausreichend Brennstoff, da dieser nur bis zum Austritt der Vorstufe im Domabschnitt 13 ablaufen kann.

Tritt bei annähernd leerem Tank eine Kurvenfahrt ein, dann schwappt der Brennstoff aus dem Schlingerkammerbereich weg, so daß die Vorpumpe 5 über die Vorkammer kein Brennstoff mehr ansaugt. Dabei eventuell angesaugtes Gas gelangt dann in die erste Schlingerkammer 8 und sammelt sich im Domabschnitt 13 bzw. wird über den Anschluß 14 in den freien Tankraum 10 gefördert. Die Hauptpumpe 6 saugt in dieser Phase weiterhin gasfreien Brennstoff aus dem unteren Bereich der Schlingerkammer 8 an, wobei auch aus der gefüllten zweiten Schlingerkammer 15 über den Anschluß 16 bzw. über den Bypass 19 Brennstoff in die erste Schlingerkammer gelangt.

Die aus der ersten und zweiten Schlingerkammer 8, 15 bereitgestellten Brennstoffmengen sichern in dieser Phase einen beanstandungsfreien Lauf des Motors bzw. des Fahrzeuges. Durch ausgewählte Volumina der ersten und zweiten Schlingerkammern 8, 15 ist der Vorteil erreichbar, daß sich ein schneller Vordruck in der ersten Schlingerkammer 8 einstellt, womit das Startverhalten und der Heißbetrieb der Brennkraftmaschine verbessert wird. Durch die zweite, größere Schlingerkammer 15 wird ein größeres Speichervolumen für Kurvenfahrt erreicht.

In Verbindung mit dem erwähnten Rückschlagventil 18 wird die Phase des Vordruckaufbaus verkürzt.

Durch das als Bypass 19 angeordnete Rückschlagventil 8 läßt sich das Volumen der ersten Schlingerkammer 8 gegenüber dem der zweiten wesentlich verringern, da ein im wesentlichen ungedrosselter Zufluß aus der zweiten Schlingerkammer 15 in die erste erfolgen kann, wenn bei Kurvenfahrt über die Vorpumpe 5 Gas angesaugt wird und der Vordruck im Schlingertopf 8 zusammengebrochen ist.
Damit läßt sich die Phase des Vordruckaufbaus noch einmal verkürzen.

Bei der Ausführung nach Fig. 2 wird erreicht, daß beim Nichtfördern der Vorpumpe der Vordruck in der Schlingerkammer 8 in einem gewissen Maße über die Strahlpumpenwirkung erhalten bleibt, wodurch die Hauptpumpe auch bei diesen extremen Bedingungen gasfreien Brennstoff ansaugen kann.

Die erfindungsgemäße Brennstoffördereinrichtung läßt sich auch sehr einfach montieren, und zwar in der Art, daß das Pumpenaggregat 4 mittels der elastischen Einspannstücke 26 geräuschgedämpft und abgedichtet in die erste Schlingerkammer 8 einzustecken ist.

## Patentansprüche

1. In einen Brennstofftank (1) einsetzbare Brennstofffördereinrichtung mit einer Schlingerkammer (8) mit einem Pumpenaggregat (4), bestehend aus Vor- und Hauptpumpe (5, 6), wobei die Vorpumpe (5) in die Schlingerkammer hinein und die Hauptpumpe (6) herausfördert und die Schlingerkammer (8) einen Domabschnitt (13) aufweist, der einen Anschluß in den freien Tankraum (14) aufweist, dadurch gekennzeichnet, daß die Schlingerkammer (8) von einer weiteren Schlingerkammer (15) umgeben ist, die mit der ersten durch einen im unteren Bereich beider Kammern (8, 15) bestehenden Anschluß (16) verbunden ist und nach oben zum freien Tankraum (10) hin offen ist.

2. Einrichtung nach Anspruch 1, dadurch gekennzeichnet, daß der von der Brennkraftmaschine nicht benötigte Brennstoff über einen Rücklaufanschluß (12) in die erste Schlingerkammer (8) einmündet.

3. Einrichtung nach Anspruch 1 oder 2, dadurch gekennzeichnet, daß der die beiden Schlingerkammern (8, 15) im unteren Bereich verbindende Anschluß (16) und der aus dem Domabschnitt (13) in den freien Tankraum (10) führende Anschluß (14) einen Drosselabschnitt (17) aufweisen.

4. Einrichtung nach Anspruch 2, dadurch gekennzeichnet, daß der im unteren Bereich angeordnete Anschluß (16) ein Rückschlagventil (18) aufweist, das das Ausströmen aus der ersten Schlingerkammer (8) verhindert.

5. Einrichtung nach Anspruch 3, dadurch gekennzeichnet, daß zum gedrosselten Anschluß (16) ein Bypass (19) mit Rückschlagventil (18) vorgesehen ist, so daß das Ausströmen aus der ersten Schlingerkammer (8) verhindert wird.

6. Einrichtung nach Anspruch 2, dadurch gekennzeichnet, daß der im unteren Bereich angeordnete Anschluß (16) den Einlaß einer Strahlpumpe (21) bildet, deren Strahldüse (22) durch den Rücklaufanschluß (12) gebildet ist und den Rücklaufbrennstoff in den Einlaß (20) strahlt.

7. Einrichtung nach einem der vorstehenden Ansprüche, dadurch gekennzeichnet, daß wenigstens zwischen der Hauptstufe (6) des Pumpenaggregats (4) und Saug- und Druckstutzen (23, 24) der Vorpumpe (5) sowie Schlingerkammerwänden (21) elastische Einspannstücke (26) eingespannt sind.

8. Einrichtung nach einem der vorstehenden Ansprüche, dadurch gekennzeichnet, daß die erste Schlingerkammer (8) ein kleineres Volumen als die zweite Schlingerkammer (15) aufweist.

## Claims

1. Fuel delivery system insertable in a fuel tank (1), having an anti-roll chamber (8) with a pump aggregate (4) consisting of a fore pump and main pump (5, 6), wherein the fore pump (5) pumps into the anti-roll chamber and the main pump (6) pumps out, and the anti-roll chamber (8) has a dome section (13) communicating with the open interior of the tank (14), characterised in that the anti-roll chamber (8) is surrounded by a further anti-roll chamber (15), which is connected to the first by a connection (16) existing in the lower region of both chambers (8, 15) and is open at the top with respect to the open interior of the tank (10).

2. System according to claim 1, characterised in that the fuel not required by the internal combustion engine passes via a return connection (12) into the first anti-roll chamber (8).

3. System according to claim 1 or 2, characterised in that the connection (16) connecting the two anti-roll chambers (8, 15) in the lower region and the connection (14) leading out of the dome section (13) into the free interior of the tank (10) have a throttle section (17).

4. System according to claim 2, characterised in that the connection (16) disposed in the lower region has a non-return valve (18), which prevents leaking from the first anti-roll chamber (8).

5. System according to claim 3, characterised in that a bypass (19) with a non-return valve (18) is provided to the throttled connection (16), so that leaking from the first anti-roll chamber (8) is prevented.

6. System according to claim 2, characterised in that the connection (16) provided in the lower region forms the inlet of an injection pump (21), whose injection nozzle (22) is formed by the return connection (12) and injects the recycled fuel into the inlet (20).

7. System according to one of the preceding claims, characterised in that at least between the main stage (6) of the pump aggregate (4) and the induction and compression nozzles (23, 24) of the fore pump (5) and anti-roll chamber walls (21) resilient bracing members (26) are mounted.

8. System according to one of the preceding claims, characterised in that the first anti-roll chamber (8) has a smaller volume than the second anti-roll chamber (15).

## Revendications

1. Appareil d'alimentation en carburant pouvant être monté dans un réservoir de carburant (1), comportant une chambre antiroulis (8) ayant un groupe de pompes (4) constitué d'une prépompe (5) et d'une pompe principale (6), la prépompe (5) refoulant dans la chambre antiroulis et la pompe principale (6) refoulant hors de celle-ci, et la chambre antiroulis (8) présentant une partie dôme (13) qui présente une liaison (14) menant à l'espace libre du réservoir, caractérisé par le fait que la chambre antiroulis (8) est entourée d'une autre chambre antiroulis (15) qui est reliée à la première par une liaison (16) prévue dans la partie inférieure des deux chambres (8, 15) et est ouverte vers le haut vers l'espace libre (10) du réservoir.

2. Appareil selon la revendication 1, caractérisé par le fait que le carburant dont le moteur à combustion interne n'a pas besoin va par une liaison de retour (12) dans la première chambre antiroulis (8).

3. Appareil selon l'une des revendications 1 et 2, caractérisé par le fait que la liaison (16) reliant les deux chambres antiroulis (8, 15) dans leur partie inférieure et la liaison (14) menant de la partie dôme (13) à l'espace libre (10) du réservoir présentent une partie étranglée (17).

4. Appareil selon la revendication 2, caractérisé par le fait que la liaison (16) située dans la partie inférieure présente un clapet de non-retour (18) qui empêche l'écoulement de la première chambre antiroulis (8).

5. Appareil selon la revendication 3, caractérisé par le fait que parallèlement à la liaison étranglée (16) est prévue une dérivation (19) avec clapet de non-retour (18), ce qui empêche l'écoulement de la première chambre antiroulis (8).

6. Appareil selon la revendication 2, caractérisé par le fait que la liaison (16) située dans la partie inférieure forme l'entrée d'une pompe à jet (21) dont la buse à jet (22) est formée par la liaison de retour (12) et émet le carburant de retour dans l'entrée (20).

7. Appareil selon l'une des revendications précédentes, caractérisé par le fait que des pièces de serrage élastiques (26) sont montées au moins entre l'étage principal (6) du groupe de pompes (4) et les tubulures d'aspiration et de refoulement (23, 24) de la prépompe (5) ainsi que les parois (21) des chambres antiroulis.

8. Appareil selon l'une des revendications précédentes, caractérisé par le fait que la première chambre antiroulis (8) a un plus petit volume que la deuxième (15).
